# EUROPEAN PATENT SPECIFICATION

(11) **EP 0 461 121 B1**
(45) Date of publication and mention of the grant of the patent: **19.03.1997**
(21) Application number: 90902467.1
(22) Date of filing: 04.01.1990
(51) Int. Cl.: H04N 1/40, H04N 1/46

(54) **NON-IMPACT PRINT APPARATUS AND METHOD FOR GREY LEVEL RECORDING**
ANSCHLAGFREIER DRUCKER UND GRAUWERTAUFZEICHNUNGSVERFAHREN
IMPRIMANTE SANS IMPACT ET PROCEDE D'ENREGISTREMENT D'ECHELLE DE GRIS

(43) Date of publication of application: 18.12.1991
(73) Proprietor: EASTMAN KODAK COMPANY, Rochester, New York 14650-2201 (US)
(72) Inventor: PHAM, Hieu, T., Webster, NY 14580 (US); ZEISE, Eric, K., Pittsford, NY 14534 (US); TSCHANG, Pin, S., Rochester, NY 14617 (US)
(74) Representative: Lewandowsky, Klaus, Dipl.-Ing.
(86) International application number: US9000074
(87) International publication number: WO9110311

(56) References cited:
- EP-A- 0 188 023
- EP-A- 0 208 919
- EP-A- 0 213 891
- US-A- 3 482 039
- US-A- 3 830 967
- US-A- 4 040 094
- US-A- 4 074 320
- US-A- 4 370 667
- US-A- 4 750 010
- Proceedings of the SID vol. 21, no. 2, 1980, Los Angeles (US) pages 171 - 175; Nakaya et al.: "Gray-scale thermal recording"

## Description

### BACKGROUND OF THE INVENTION

### 1. Field of the Invention

The present invention relates to a non-impact dot printer for printing halftone or continuous tone information and the like with small pixels (dots).

### 2. Description of the Prior Art

The Proceedings of the SID vol. 21, no. 2, 1980, Los Angeles disclose an electronic scanning thermal recording system that uses a thermal print head having many heat resistive elements arranged in a line. The paper descibes a method to compensate the characteristic of a thermal recording paper. As a consequence the interval of the count clock is changed so that it becomes long at the initial stage, short at the intermediate stage and again long at the final stage. Values stored in a ROM should be set so that they can compensate for the characteristic of a thermal recording paper. This method is not able to compensate for uniformity discrepancies in individual heat resistive elements.

The document EP-A-0 213 891 discloses an image processing apparatus in which plural image signals are generated for modulating plural light beams for obtaining different colors. In order to avoid unpleasent moire pattern on a reproduced image, the plural image signals are generated with mutually different screen angles by comparing the signals, in the generation thereof, with different analogue pattern signals having mutually different characteristics of the colors, e.g. different phases of frequencies. This apparatus does not disclose the use of LEDs arranged in an array. It refers to the modulation of a laser beam.

Various non-impact recording or printer heads for use as dot printers are known. Examples of such heads include an electrostatic printer head, an LED (light emitting diode) array printer head, ink-jet printer head, thermal printer head, etc. While the invention will find utility with regard to non-impact printers in general, discussion will be made herein with regard to LED printer heads with which the inventio is particularly suited.

In US-A-4,750,010 an LED printer is described in which a series of LED's arranged in a straight line are selectively activatable for brief periods to form dot-like images on a recording surface. One feature of this printer is that the signal pulses to all the selected LED's causing same to be activated during any one PEL period (picture element period or dot line period) are symmetrical about a center line. The term used to describe this arrangement of signals is "center pulse width modulated." The reasons for arranging such signals in this manner are described in the patent. In one embodiment of a printer head described in this patent, grey scale recording is achieved by having a digital comparator associated with each LED. At one input to the comparator, there is provided the data in the form of a plurality of digital data bits representing an exposure on-time for that LED for that PEL period. At a second input to the comparator, an input from an up/down counter is provided that is rapidly changing in accordance with signals emitted from a high speed clock. As the counter output value decreases towards zero at some point in time a match is sensed by the comparator between the two inputs of the comparator (in accordance with its operating criterion). The LED then turns on and remains on for a very brief duration until a subsequent sensing of a match by the comparator occurs during a count-up phase of the counter. The above patent notes that the data may be adjusted to provide also for exposure balancing of0the LED's. This is desirable where non-uniformity in illumination from LED to LED on the printer head may be expected. While the patent notes that a programmable clock may be employed to adjust the time period for each clock pulse, the clock periods will nevertheless be uniform after any such adjustment.

A problem with the above is that it does not efficiently cover as much exposure space as might be desirable for grey level recording. Assuming one employs six data bits to define each pixel, 63 levels of grey may be recorded (not including white, i.e., no activation.) However, these 63 levels must be recordable within a time period comprised of at most 126 uniform clock periods plus a minimum established time, T_{MIN}. Where the clock periods are of relatively short duration, the 63 levels of grey may not provide the desirable range of grey levels. On the other hand, where the clock periods are of relatively longer duration, adequate extremes of grey may be recorded but fine differences in grey level recording particularly desired at relatively lower grey values will be lost.

It is an object of this invention, therefore, to overcome the deficiencies described in the prior art.

### SUMMARY OF THE INVENTION

The objects of the invention are realized by a method and apparatus for printing as disclosed in the claims 1, 11, 14 and 21.

### DESCRIPTION OF THE DRAWINGS

FIG. 1 is a perspective view illustrating the general arrangement of a non-impact printer as used in the embodiment of the invention and as known in the prior art;
FIG. 2 is a schematic of a printer circuit for recording grey scale information in accordance with the invention;
FIG. 3 is a timing diagram of sets of waveforms generated using the apparatus and method of the invention;
FIGS. 4-9 illustrate various graphs that may be used to determine the various allowed on-times for the recording elements.

### DESCRIPTION OF THE PREFERRED EMBODIMENTS

Because apparatus of the type described herein are well known, the present description will be directed in particular to elements forming part of, or cooperating more directly with, the present invention.

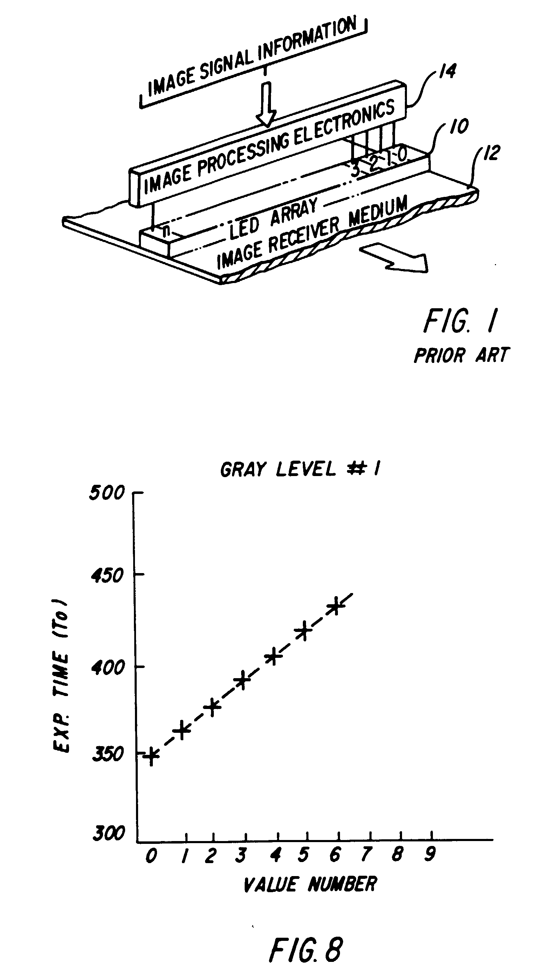

The apparatus for the herein disclosed invention is typified by the diagram of FIG. 1: a linear array 10 of say 3584 triggerable radiation sources; e.g. LED's, is disposed to expose selectively a photosensitive image-receiver medium 12 that is movable relative to the array by suitable conventional means (not shown). Optical means for focusing the LED's onto the medium may also be provided. In this regard, gradient index optical fiber devices such as Selfoc (trademark of Nippon Sheet Glass Co., Ltd.) arrays are highly suited. The LED's of the array are triggered into operation by means of image processing electronics 14 that are responsive to image signal information. Depending on the duration for which any given LED is turned on, the exposure effected by such LED is more or less made. Where the medium 12 is, say, photographic film the latent image formed line by line by selective exposure of said LED's may be subsequently developed by conventional means to form a visible image. Where the medium 12 is an electrophotographic receptor, the LED's may be used to form an electrostatic image on a uniformly electrostatically charged photoconductor and this image developed using colored toner particles and perhaps transferred to a copy sheet, see US-A-3,850,517.

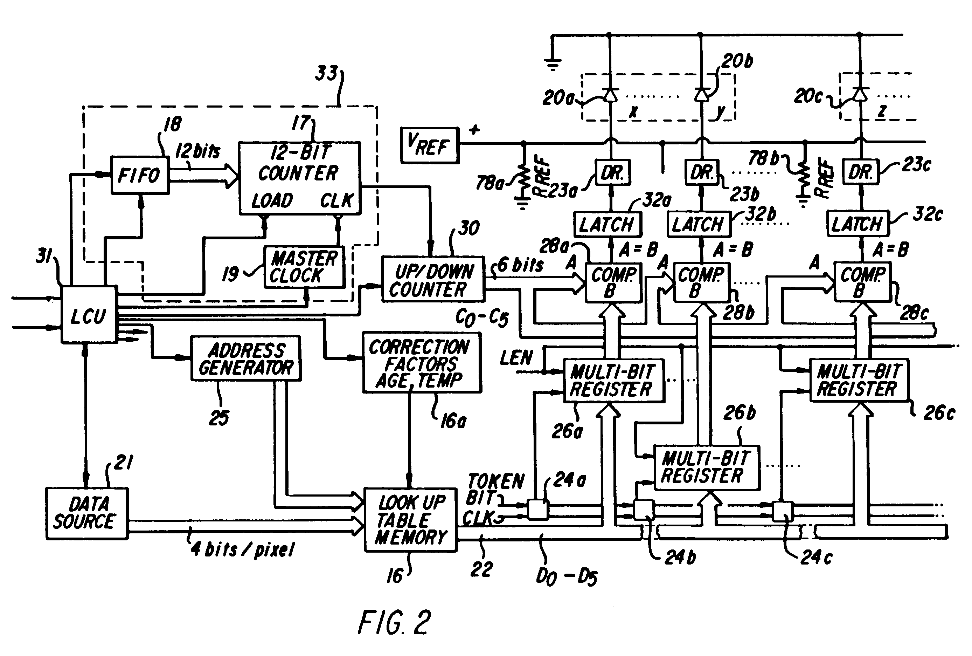

With reference now to FIG. 2, a circuit is shown which may be used for triggering selectively the LED's 20 that together comprise the array 10. Only a few of the LED's and its associated driver circuitry are shown for clarity purposes, it being understood that the circuitry for driving such other LED's is similar to that described for the illustrated examples. While the figure shows all the driver circuitry associated with the LED's located to one side of the line of LED's, it is well known to place these circuits on both sides of the line of LED's to provide more efficient utilization of space.

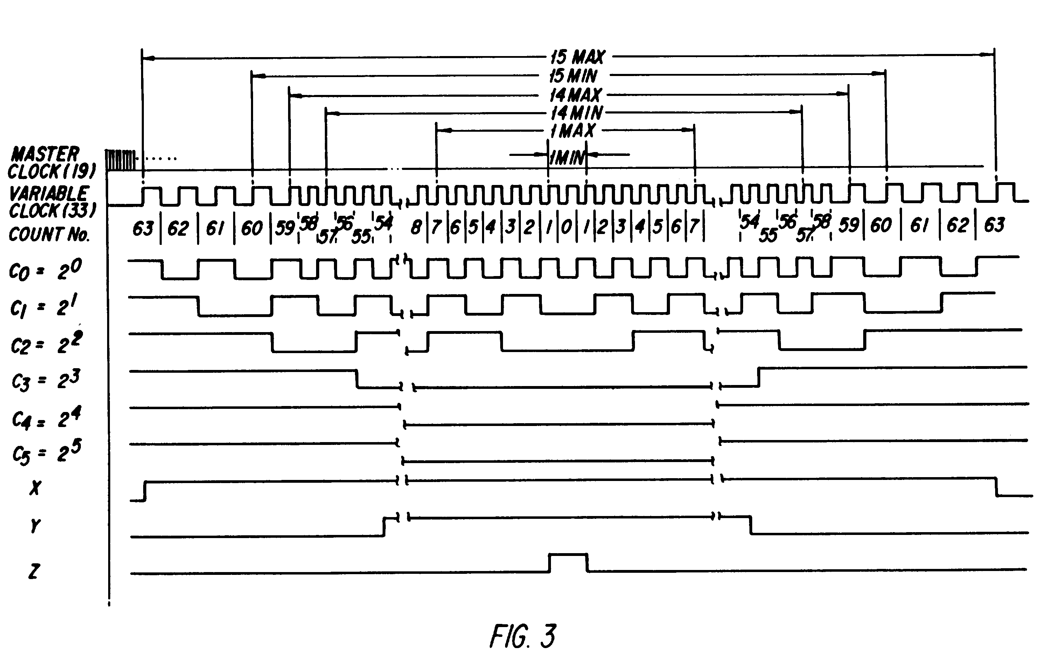

Data to be printed for each line is in the form of binary digital signals, e.g., 1's and 0's. This data on lines labeled D₀-D₅ are outputted in parallel onto the data bus 22. The data on lines D₀-D₅ comprises, in this example, a six-bit signal representing an exposure time for a particular LED for printing a single grey level recorded dot. Synchronously with the generation of each six-bit data signal, there is generated by, for example, a logic and control unit (LCU) 31 a token bit signal which is a single bit that is shifted down a shift register formed by a plurality of individual registers 24a, 24b, 24c, etc. Each such register is associated with a particular LED. This token bit determines which of the LED's a particular set of data on bus 22 is intended. In operation, a series of six-bit data signals are provided on bus 22 and one six-bit signal is latched by each of the 3584 multibit registers 26a, 26b, 26c associated with each LED. The latching being in response to the presence of the token bit in the particular register 24a or 25b or 25c, etc. Further description relative to a circuit for selectively latching this data is provided in US-A-4,746,941, entitled "Dot Printer With Token Bit Selection of Data Latching." After a six-bit data signal is stored in each of the multi-bit registers, a latch enable (LEN) signal is provided by the LCU 31 to shift this six-bit signal to an output stage or latch of each register so that a six-bit level data signal (say decimal 10 for LED 20a for this particular PEL period) is output to one input terminal (B) of a respective digital comparator 28a, 28b, 28c, etc. associated with each LED. At this point in time a digital counter 30 is enabled by LCU 31 to count down, in this example, from decimal 63 (2⁶-1) to 0. The output of the counter 30 is a six-bit signal, in this example, (C₀-C₅) representing in digital form a number or count which changes periodically in accordance with clock pulses from a programmable clock 33. With each pulse (or trailing edge of same) from clock 33, the counter changes its count at its output. The output of counter 30 is input into each of the input terminals (A) of the digital comparator. Thus, the comparators now compare the signals at their respective A and B inputs in accordance with the comparators criteria for operation, i.e., is A equal B? When the count output by the counter 30 and inputted at terminal A is equal to a respective input data signal count input at terminal B (decimal 10, for example, but can be any number between 1 and 63) the output of a respective comparator goes to a digital logic high level and is latched at a respective latch register 32a, 32b, 32c, etc. The latched signals allow drivers 23a, 23b, 23c to be enabled, at the rising edge of the next clock pulse from programmable or variable clock 33, to commence and maintain current respectively to LEDs 20a, 20b, or 20c, etc. After the counter 30 counts down to zero, the counter 30 is either reset by the next clock pulse into a count-up mode or is inhibited from counting additional clock pulses for a minimum period T_{MIN} that is programmed into the counter or provided by other suitable means. In the example shown in FIG. 3, the duration of T_{MIN} is from a count of "1" in the down counting mode to a count of "1" in the up counting mode and the manner for controlling the time for reaching these counts will further be described below. In any event, after this predetermined time period T_{MIN}, the counter is set to count in its count-up mode and commences counting clock pulses again. When the counter output in its count-up mode reaches decimal 10, the output of comparator 28a changes and the latch 32a is reset and current to the LED 20a ceases. The other LED's 20b, 20c, etc. operate in similar fashion but their data will require different count values to turn on and off in accordance with grey scale data provided in their respective multi-bit registers. What these LED's will, thus, have in common with LED 20a is that all will have their respective current pulses centered. The current level to each LED is the same but the pulse duration for each LED during each line of print is varied. In this embodiment the LED's may be initially "balanced" such as by adjusting a "trim" resistor 78a, 78b, associated with etch driver chip; see for example, PCT Publication WO-A-88/07729. In addition, further balancing or correction for unequal light output may be provided by adjustment of the data in accordance with the characteristics of each LED. Thus, a memory device such as a programmable read-only memory device or PROM may store the characteristics of each LED and data for that LED can be modified to provide an input count at terminal B that represents data modified by the exposure characteristics of the LED. For example, for an LED that is a relatively strong light emitter the PROM would modify data bits for that LED to reduce the count that otherwise would be provided at terminal B based solely on the data.

Further description relative to this additional type of balancing or recording elements will be provided below.

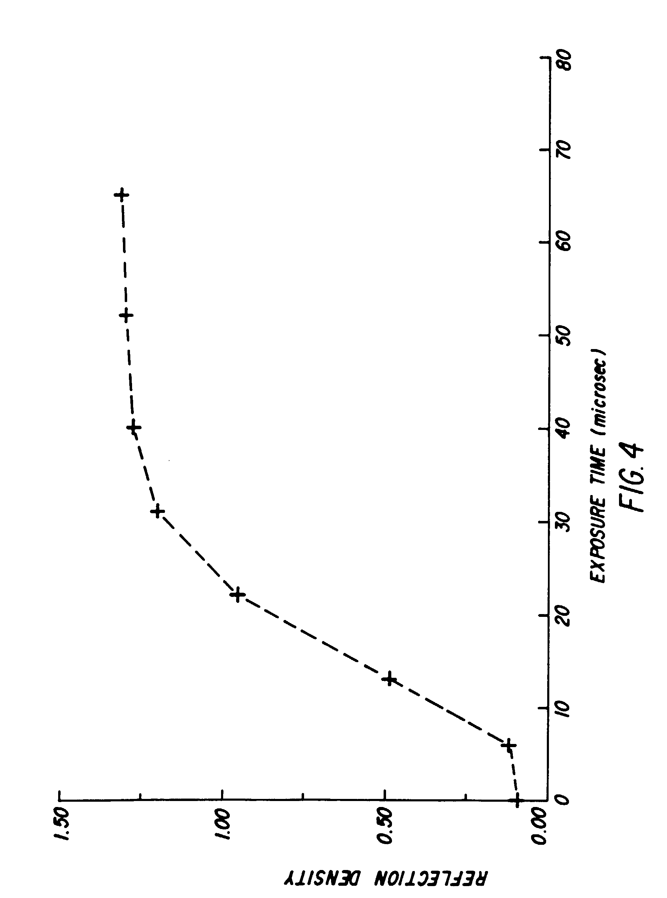

With reference to FIG. 4, there is illustrated a typical diagram illustrating recorded reflection density versus exposure time for a recording using a single average LED in the array. The recorded reflection density will vary obviously in accordance with the exposure time of this LED. As may be noted the eventual reflection density approaches a maximum value and that further exposure durations produce some, but not great, changes in recorded reflection density.

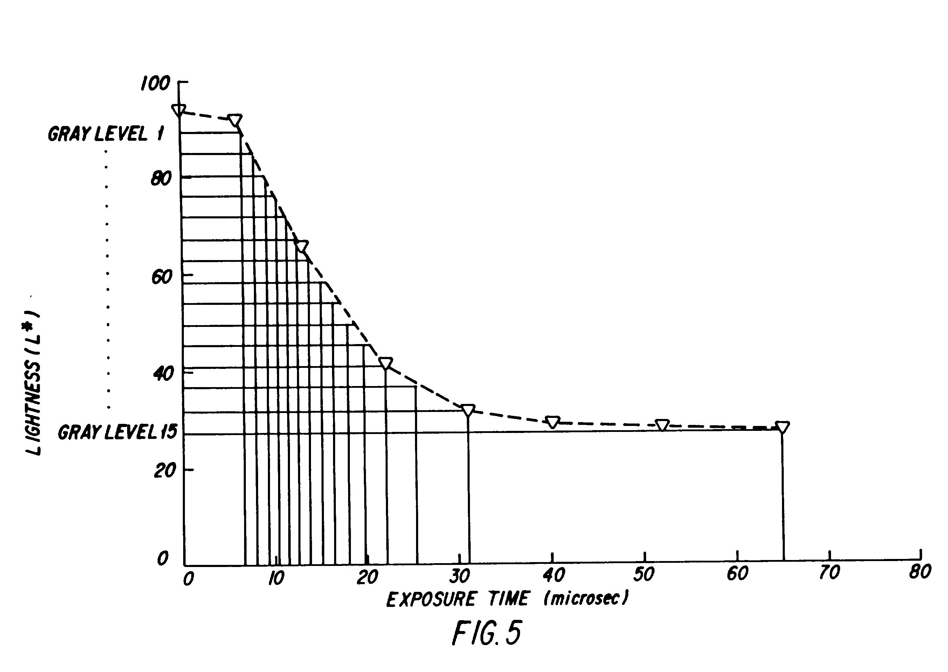

FIG. 5 illustrates the data of FIG. 4 transformed into lightness space. As known to those skilled in the art, such a transformation may be readily made by taking a value of reflection density (D) and forming the variable "lightness" (L*) therefrom in accordance with any of several known equations. Like transformations, including those for use in color printing and providing transformations into color space are also well known. Thus, lightness may now be plotted versus time and provides a relationship between various exposure times. It should be kept in mind that the light output of this LED is preferably balanced to at least some degree using adjustments to say R_{REF}, the driver resistance value as described above. The advantage of employing the relationship between lightness and time is that, as is known, one can divide lightness space into equal increments and employ the corresponding exposure times to obtain a series of exposure areas with levels of grey that to the human eye appear to represent equal percentage changes in lightness. Thus, as shown in FIG. 5, lightness space is divided into 15 equally spaced grey levels (1 - 15) where obviously the higher the lightness value, the lower the grey value. The division into 15 levels is selected since in this embodiment output by the data source 21 provides 4 bits per pixel of rasterized data or grey level information or decimal 15 (2⁴-1) levels of grey and one level being no or "0" exposure. Thus, the 15 levels are chosen by selecting the lowest and highest desired levels of lightness and dividing the space in between to provide 15 levels of lightness or grey values. For each grey value a corresponding exposure time is associated therewith for each LED.

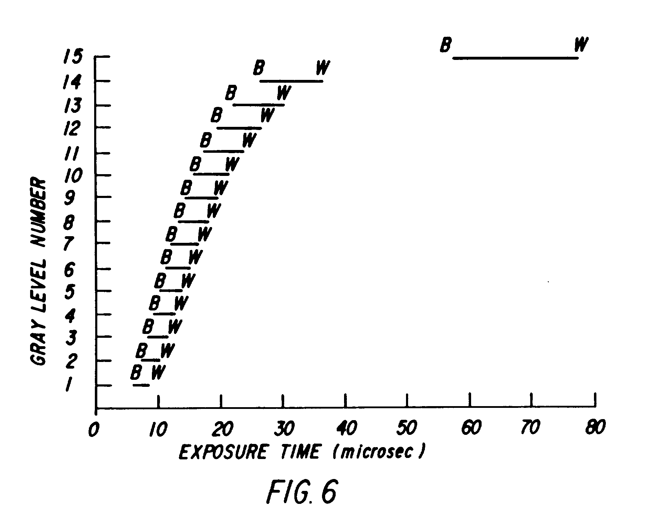

Description will now be had with reference to the graph in FIG. 6. In the description provided with regard to FIG. 5, it was noted that this was typical data for an average LED. Recall that the LEDs have been somewhat balanced by use of selective adjustment of R_{REF} associated with say 64 LEDs driven by the respective driver chip. However, there will still be a small percentage of differences in light outputs between the LEDs; i.e., for the same signal some LEDs will provide more light and others less light because of their inherent differences or due to differences in their drivers or variations in LED fabrication process. FIG. 6 represents an illustration of this. Each horizontal hash-like line represents a range of exposure times that are needed for all the LEDs in the array to provide an exposure of the indicated grey level. Taking grey level No. 1, for example, the very brightest LED in the arrays will require the least amount of exposure time to record a density equivalent to grey level No. 1. This exposure will be for the period T_{MIN} shown in FIG. 3. The minimum exposure time for each grey level is indicated by the letter B (for brightest LED's) which is located at the left most extreme of each line. On the other hand, the very weakest LED's in the array will require the longest exposure time (indicated by a W at the end of the line) to produce a dot having a density equal to grey level No. 1. Obviously, the remaining LED's in an array will require exposure "on" times between points B and W. The range of exposure times for each LED may then be determined for each grey level as shown.

It may also be noted in FIG. 6 that for any LED the exposure time difference for producing a dot of grey level No. 2 versus that for producing a dot to form grey level No. 1 is a very small difference in time. In this regard, compare the difference in exposure times for the brightest LED's (B) at grey level No. 1 and at grey level No. 2 with that difference in exposure times for the brightest LED's between grey levels Nos. 14 and 15. While the time between "B" of grey level 15 and "W" of grey level 14 is shown exaggerated to demonstrate the flexibility of the improved printing apparatus, it is generally true that the eye is more sensitive to changes at the lower levels of density than for changes at the upper levels of density. Similarly, if one desired to precisely balance the outputs of all the LED's on an array an algorithm for achieving this balance can preferably take advantage of this fact. However, for one designing a printhead using digital devices a constraint is provided as to how much correction information can be provided realizing that data has to be carried over lines formed on the printhead and only so many lines can be economically provided on a printhead. In addition, the more lines of data require more complexity in the logic devices for handling this data on the printhead.

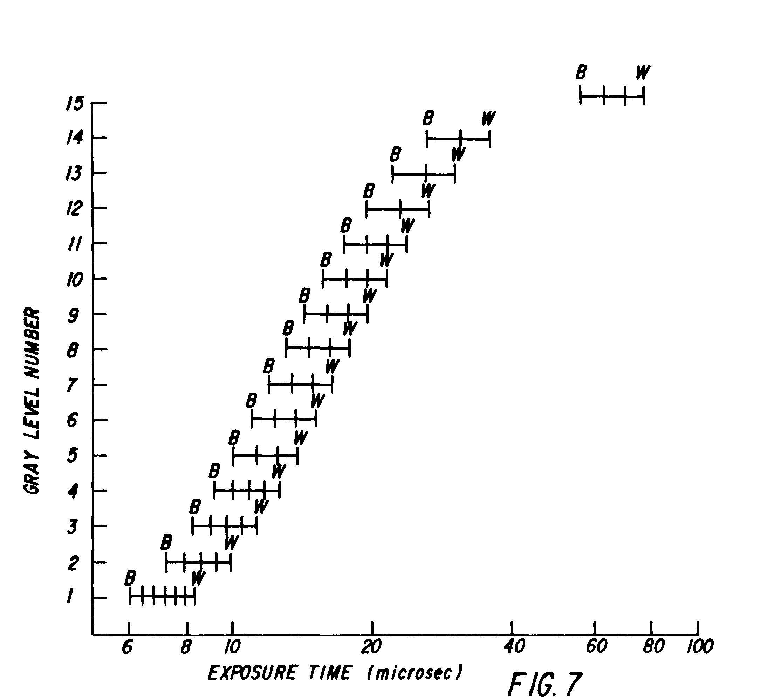

With this in mind, reference will now be made to FIG. 7 wherein the exposure times associated with each grey level are shown divided up by vertical lines which will now be explained. Recognizing that a printhead has 3584 LEDs the range of exposure times for producing a dot of grey level No. 1 will fall on the horizontal line shown. If this line is divided into say seven distinct values, all exposures times on this horizontal line can be approximated by one of the times represented by the seven vertical lines crossing this horizontal time line. Similarly, this can be repeated for each grey level but note that higher grey levels need not have as many approximating points as the eye may not be able to detect finer approximations. Recognizing this will result in more efficient use of available data lines.

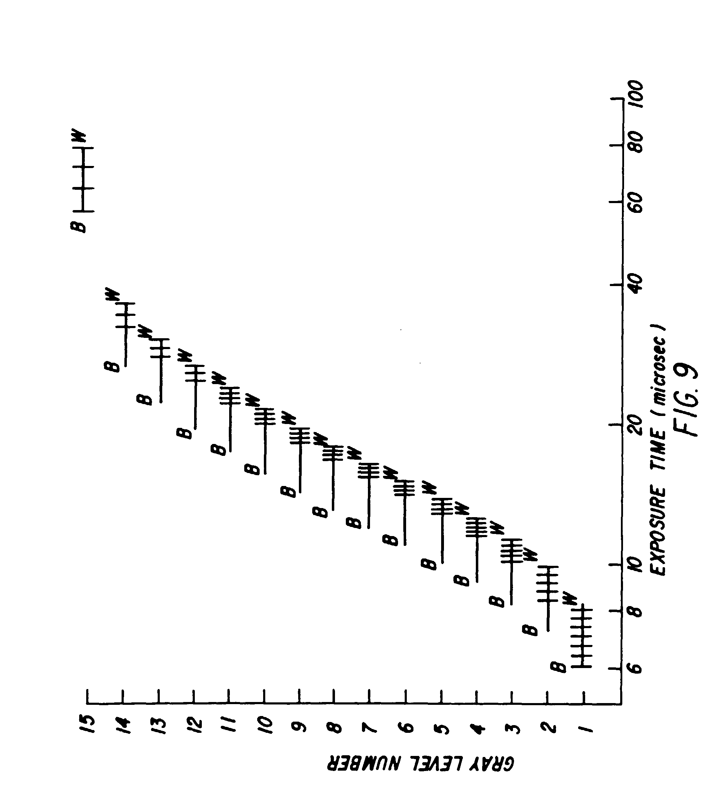

With reference now also to the graph of FIG. 8, the seven approximated exposure times for grey level No. 1 are assigned a value "0" through "6" and are plotted against exposure time in terms of number of master clock periods. Time in the printer apparatus of FIG. 2 is measured in terms of clock periods from master clock 19. Master clock 19 being a clock providing regular pulses at a frequency of say 40MHz. Note that the master clock may also be a programmable voltage controlled oscillator. Thus, for producing grey level No. 1 the brightest LEDs will be "on" for say 350 pulses from master clock 19.

With reference now to the graph of FIG. 9, a modification from FIG. 7 has been made to eliminate overlap in exposure times between the various grey levels. In this example, the five approximating time values used for grey level No. 2, however, are confined to the time line portion of this line that will not provide overlap with other times in other grey levels. Thus, except for grey level No. 1, in this example closer approximations are made for exposure correction for the various grey levels as will be described below and more efficient use of data realized.

As may be noted from FIG. 9, for this example, the allowed exposure times number 63 which is 2⁶-1. This can be seen by counting the vertical exposure time lines shown, i.e., add the seven lines for grey level No. 1, the five lines for grey level No. 2, the five lines for grey level No. 3, etc. Thus, only 6 data lines are required to go to the printhead to provide possible exposure enabling times for the LED's that extends over a relatively long duration yet provides for fine approximations for correction in those areas of lightness space where it is needed.

Description will now be provided as to a preferred method and apparatus for generating the signals for creating these 63 exposure times which are nonlinearly related. In the graph shown in FIG. 9, exposure times are shown to vary, for the particular printhead illustrated, from 6 microseconds to about 80 microseconds. Recall also that the technique employed for creating a single pulse width exposure period is to provide a minimum on time T_{MIN} for the shortest duration pulse used which can be considered the pulse for driving the very brightest LED for the minimum time necessary to record grey level No. 1. As noted in the graph of FIG. 8, an exposure in time units is equated with a value number which latter number may be used as the count from counter 30. For each grey value, there are calculated the corresponding value numbers (from 0 to 63) of the allowed exposure times shown in FIG. 9.

With reference now to FIG. 2, description will now be provided relative to the circuit 33 for generating clock pulses that change with a varying periodicity. A memory device such as a first-in, first-out memory 18 is loaded in this example with a 12-bit number that is provided, for example, by a serial signal from LCU 31. This 12-bit number is output in parallel from the FIFO 18 and input to a 12-bit counter 17 that includes a comparator means. At the beginning of a PEL period (picture element period) this counter is reset by a signal from LCU 31 and in response to a synchronizing signal from LCU 31 commences to count clock pulses from master clock 19. Upon reaching the 12-bit count provided at its input, the counter 17 emits a single pulse and resets itself to repeat this operation. Alternatively, the counter may be preset to the 12-bit count that is input thereto and count down to zero and emit a single pulse. As long as the 12-bit number at its input remains unchanged the counter 17 will emit a series of pulses equally spaced in time. The output of this counter 17 comprises the output of the elements defined as the variable clock 33. As may be noted in FIG. 3 in the time line labelled "variable clock" the output of this clock is shown to be groups of clock pulses wherein, for this example, in each group the respective pulses are uniformly spaced. Each of these groups can be thought of as representing exposure times for a particular grey level. However, recall also that as described with regard to FIG. 9 that there is overlap in exposure times between grey levels. As may be noted from FIG. 9, the exposure times for grey level No. 15 can be approximated by 4 exposures times indicated by the vertical lines. These 4 times are represented by the 4 uniformly spaced in-time clock pulses (rising edges of variable clock 33) in the group labeled (grey level) "#15 MAX - #15 MIN." The spacing between clock pulses is directly related to the 12-bit number or clock coefficient output from FIFO memory device 18. In this example, the FIFO memory has input therein, from LCU 31, 127 clock coefficients. As the clock pulses are to be created in groups of uniformly spaced pulses, some of the coefficients are the same so that after counting to the 12-bit number and emitting a single variable clock pulse the counter receives the next 12-bit number which may be the same as the previous 12-bit number.

After producing these 4 uniformly spaced clock pulses for grey level No. 15, the FIFO outputs a new 12-bit number. This causes 12-bit counter 17 to create a series of differently uniformly spaced pulses that are spaced a different amount in time related to the new 12-bit number output by the FIFO memory to the counter 17. The three pulses in this next group are labelled (grey level) "#14 MAX - #14 MIN" and relate to the three time divisions of grey level No. 14 shown in FIG. 9. The process continues in like manner to that described above with groups of uniformly spaced clock-like pulses created but having different periodicity from group to group. The up/down counter 30 counts these pulses and initially is in a down count mode. Thus, the output of the counter 30 has its six output lines C₀-C₅ provided with digital signals as shown in FIG. 3. The decimal representation of the combined count in all six lines C₀-C₅ is also indicated. As may be noted the count changes nonlinearly with time just in the same way for the time line illustrated in FIG. 9. Note in Fig. 3 that the longest duration pulse that can be provided is that shown as the pulse x used for the weakest (w) of the LEDs to energize each for a time period to record a grey level No. 15 dot. The shortest duration pulse Z is provided to the brightest of the LEDs (B) when energized to each record a grey level No. 1 dot. All other exposure times for the LEDs will be like pulse Y for a duration that is between these two extremes. Note all exposure pulses to create a dot are of a single pulse and are center pulse width modulated to provide for a better looking print particularly when printing lines, etc.

In the discussion provided above, it was noted that the data source 21 provided data information having 4 bits per pixel while the data passed along to data bus D₀-D₅ was 6 bits per pixel. As may be noted in FIG. 2, the data sources output is input to a lookup table memory device 16 along with an address provided by an address generator 25. The address generator points to the location in memory device 16 thereof where data is stored for each particular LED. Thus, a table of memory is provided for each LED and indicates for this LED a corresponding exposure time for each grey level it is to print. It is this exposure time which is a six-bit digital number that is output as data onto data bus D₀-D₅.

While the six-bit per pixel signal (D₀-D₅) represents exposure information corrected for nonuniformities of the LED's, it is recognized that during use of the printhead nonuniformities arise due to different aging of the LED's or due to differences in temperature. Aging differences are created when some LED's are used more than others during the course of different print jobs. In US-A-4,799,071, it is proposed to minimize aging differences by activating underused LED's during periods of non-use of the printer for printing a print job or otherwise correcting for non-uniformities based on differences in aging as the printhead is being used. Thus, factors such as those based on environmental considerations and/or usage may be accommodated by providing updated entries automatically from a correction calculator 16a to look-up table memory 16.

The preferred embodiment has been described in terms of generating a set of center pulse width modulated waveforms for enabling the LED's, wherein in the count-up mode of counter 30 the clock pulses from programmable clock 33 are provided in reverse order from that provided during the count-down mode of counter 30. This is accomplished by loading the FIFO memory (other types of memory devices such as RAM, etc. may be substituted for the FIFO type memory) with the same 12 bit numbers but with the order of providing such numbers reversed from that during count-down. The invention, however, is not limited to providing center pulse width modulated waveforms. For example, all the LED's could become enabled at different times as described but stopped at the same time such as when the count reaches zero with no count-up mode being provided. Likewise, all the LED's may become enabled at the same time and terminated at different times during a count-up mode only. Still further, a count-down and count-up mode may be provided as described for the preferred embodiment but the clock pulses from the variable clock during count-up mode of counter 30 need not be provided to effectively mirror image those provided during the count-down mode of counter 30. Thus, instead of reversing during count-up of counter 30 the order of loading 12-bit numbers from FIFO 18 to 12-bit counter 17 different numbers or ordering may be used during count-up that results in the waveforms not being center pulse-width modulated.

In the preferred embodiment approximations within a grey level have been divided into equal portions. For example, grey level No. 15 is approximated by four exposure times represented by the four vertical lines indicating same. Thus when producing variable clock pulses representing grey level No. 15 the clock pulses produced in that segment of time are equally spaced apart (see Fig. 3, variable clock line). This may be referred to as providing piece-wise linear clock pulsing. A perhaps better control providing more uniformity in printing, may be realized by dividing each grey level non-uniformly, thus providing a totally non-linear clock pulsing from programmable clock 33. In such case, a graph of the parameters exposure time versus value #, similar to that plotted in FIG. 8, would not be a straight line. The 127 clock coefficients or 12-bit numbers stored in FIFO 18 may thus be all different. Where center pulse width modulation is desired, the first 63 coefficients output from FIFO 18 may be all different while the last 63 output from the FIFO being an effective mirror-image or reversal in order of the first 63 to provide a truly non-linear clock pulsing from programmable clock 33.

While the master clock 19 has been described as producing clock pulses at regular intervals which are counted by the 12-bit counter, it is contemplated that this master clock will also be programmable so that while still emitting regular clock pulses, the time period between such regular clock pulses may be adjusted. Such adjustability may be provided by coupling the master clock 19 to the LCU so that either inputs by an operator or through automatic operation, signals from the LCU to the master clock 19 can adjust the period between master clock pulses, as may be needed for color printing or other process control such as contrast.

Thus, in color printing, for example, using well known electrophotographic reproduction apparatus, successive separate image frames on a photoconductor are exposed with color separation images to be developed, respectively, with cyan, magenta and yellow toners. The developed image frames are then transferred in register to a copy sheet. In modulating the electrostatic charge on each image frame with the printing apparatus described herein to form the color separation images the variability of master clock 19 can prove useful. The clock pulse period from adjustable master clock 19 may be adjusted automatically, by signals from the LCU 31 that are responsive to signals from data source 21, for creating exposures on one color image frame, say cyan, to the next color image frame, say that for producing the magenta image. Adjustability of master clock 19 in combination with the variable programmable clock signals from programmable clock 33 provides for a very efficient and flexible control of exposure. In the example provided above for color reproduction, it is contemplated that the duration of each master clock pulse period used for printing one color separation image frame will differ by a few percent from that used in printing a different color separation image frame to provide the fine control for exposure time. .

There has thus been described a method and apparatus for dot printing wherein a programmable clock is employed for generating clock pulses with varying periodicity to create an exposure space that provides gradations of-exposure more realistically directed to human visual perception and while doing so provides same with efficient use of data.

The invention has been described in detail with particular reference to preferred embodiments thereof, but it will be understood that variations and modifications can be effected within the scope of the invention as defined in the claims.

## Claims

1. A non-impact print apparatus which comprises:
an array (10) of radiation emitting elements (20a, 20b, 20c);
means (31) for selectively enabling the elements for predetermined periods of time during a cycle of operation to form radiation for use in recording;
the enabling means (30, 33, 28a-c) including circuit means for generating a pulse-width modulated set of waveforms for determining the enabling time of selected elements; and wherein the circuit means comprises:
digital counting means (30) having a plurality of output lines representing in digital form a time changing numerical count during a count mode;
clock means (33) coupled to the digital counting means (30) for changing the count represented by the output lines; and
comparator means (28a, 28b, 28c) coupled to the output lines and comparing the time changing count with each of several different predetermined counts and generating respective waveform pulses the duration of each of which are related to a respective predetermined count; and characterized by
the clock means (33) providing first clock pulses at non-uniform intervals for changing the count at non-uniform intervals during the count mode; and a data source means (21) providing a multibit grey level signal for each picture element to be recorded, the grey level signal being represented by N digital bits of data wherein N is an integer greater than one; and
correction means (16) for correcting for nonuniformities of said radiation emitting elements (20a, 20b, 20c), said correction means (16) being responsive to said grey level signal for generating a corrected grey level signal of N plus M bits of data for each radiation emitting element (20a, 20b, 20c) that is to be enabled to record a respective picture element wherein M is an integer greater than zero; and
the enabling means (30, 33, 28a-c) controls the time duration of the enabling of a radiation-emitting element (20a, 20b, 20c) in response to the corrected grey level signal.

2. The apparatus of Claim 1 and wherein the counting means (30) is a counter having up and down counting modes; the comparator means (28a, 28b, 28c) commencing and terminating the respective waveform pulses with respective predetermined counts, and the respective predetermined count in which each waveform pulse commences and terminates is the same numerical count but in different modes of the counter so as to establish a common center time point for the set of waveform pulses.

3. The apparatus of Claims 1 or 2 and wherein the array (10) of radiation emitting elements (20a, 20b, 20c) comprises light emitting diodes and wherein a light-emitting diode is enabled for a time period predetermined by the duration of a waveform pulse.

4. The apparatus of Claims 1 or 2 and wherein the data source means (21) provides different respective predetermined counts to establish for each of said elements (20a, 20b, 20c) different enabling times over the course of several cycles in accordance with data to be printed by said each of said elements (20a, 20b, 20c).

5. The apparatus of Claim 4 and wherein the signals for grey level printing are created in response to other data signals representing levels of grey of dots to be printed, the levels of grey represented by said other data signals being uniformly stepped in psychometric lightness space.

6. The apparatus of Claims 1 or 2 and further characterized by wherein the clock means (33) produces some first clock pulses that are at uniform intervals.

7. The apparatus of Claims 1 or 2 and wherein the clock means (33) includes a master clock (19) for generating high speed clock pulses at uniform intervals, second counter means (17) for counting a predetermined number of high speed clock pulses and generating a first clock pulse in response to the count of the predetermined number of high speed clock pulses and means for changing the predetermined number to change the interval between first clock pulses.

8. The apparatus of Claim 7 and wherein the master clock (19) is an adjustable clock; and means (31, 19) for adjusting the period of clock pulses from the master clock in response to a process condition for the image being exposed on an imaging surface.

9. The apparatus of Claim 1 and wherein the clock means (33, 19) is an adjustable clock; and means (31, 33) for adjusting the period of clock pulses from the clock means in response to a process condition for the image being exposed on an imaging surface (12).

10. The apparatus of Claims 8 or 9 and wherein the process condition is color printing and the means (31, 33) for adjusting the period of clock pulses from the clock (33) is in response to printing one of the color separation images in a series of color separation images to be used to form a multicolored reproduction.

11. A non-impact print apparatus comprising:
a plurality of recording elements (20a, 20b, 20c);
means for selectively enabling the recording elements (20a, 20b, 20c) for predetermined periods of time during a cycle of operation to form radiation for use in recording;
the enabling means including circuit means (26a, 28a, 32a, 23a) for generating a pulse-width modulated set of waveforms for determining the enabling times of selected recording elements (20a, 20b, 20c);
means (21, 16) for providing respective multibit data signals to the enabling means for recording respective picture elements by respective recording elements (20a, 20b, 20c);
clock means (33) for providing clock pulses at non-uniform intervals to said enabling means for controlling the enablement times of said recording elements (20a, 20b, 20c) during recording of said picture elements; and
means (31, 17, 18, 19) for adjusting the clock means in response to a signal representing a color for an image to be recorded, whereby the enablement time for recording, in response to a multibit data signal, a picture element for an image to be in one color is different than the enablement time for recording, in response to an identical multibit data signal, a picture element for an image to be in a different color.

12. The apparatus of Claim 11 and wherein :
an imaging surface (12) is adapted to receive the radiation;
means (31, 33, 26a, 28a, 23a, 30) for selectively enabling the recording elements (20a, 20b, 20c) for predetermined periods of time during a cycle of operation to form a series of color separated images on the surface (12); and
wherein the circuit means further comprises:
digital counting means (30) having a plurality of output lines representing in digital form a time changing numerical count during a count mode;
the clock means (33) is coupled to the digital counting means (30) for changing the count represented by the output lines; and
comparator means (28a, 28b, 28c) are coupled to the output lines and compare the time changing count with each of several different predetermined counts and generate respective waveform pulses, the duration of each of which is related to a respective predetermined count; and characterized by
wherein the clock means (33) provides the clock pulses for changing the count during the count mode and wherein the rate of changing the count is different during enablement of the radiation-emitting elements (20a, 20b, 20c) for forming an image to be in one of the colors of a series of color separated images from that rate used in enablement of the elements for forming an image to be in another color for the same series of color separated images.

13. The apparatus of Claim 12 and wherein the clock means (33) includes a master clock (19) for generating high speed clock pulses at uniform intervals, second counter means (17) for counting a predetermined number of high speed clock pulses and generating a first clock pulse in response to the count of the predetermined number of high speed clock pulses and means (31, 18) for changing the predetermined number to change the interval between first clock pulses.

14. A method of non-impact printing, comprising:
generating a multibit data signal to each of a plurality of recording elements (20a, 20b, 20c) for recording respective picture elements upon a recording medium (12);
generating clock pulses at non-uniform intervals for controlling the enablement times of said recording elements (20a, 20b, 20c) during recording of said respective picture elements; and
adjusting the enablement times for recording respective picture elements in response to a signal representing a color for an image being recorded, the enablement time for recording, in response to a multibit data signal, a picture element for an image to be in one color being different than the enablement time for recording, in response to an identical multibit data signal, a picture element for an image to be in a different color.

15. The method of Claim 14 and including:
advancing the recording medium (12) relative to the array (10), selectively enabling the elements (20a, 20b, 20c) for predetermined periods of time during a cycle of operation to form the image on the medium;
operating a digital counting means (30) having a plurality of output lines with signals thereon representing in digital form a time-changing numerical count;
changing the count represented by the output lines in response to the clock pulses;
comparing the time-changing count with each of several different predetermined counts and generating respective waveform pulses, each of which commences and/or terminates with a respective predetermined count, the time duration of each waveform pulse being different dependent upon the respective predetermined count selected; and
the set of waveform pulses determining the enabling times of selected elements (20a, 20b, 20c).

16. The method of Claim 15 and wherein the set of waveforms have a common center time point.

17. The method of Claims 15 or 16 and wherein the time-changing count is compared with a predetermined count representing data to be printed and the predetermined counts change for each of said elements (20a, 20b, 20c) in accordance with the data to be printed.

18. The method of Claim 17 and wherein the data signals represent at least in part data signals for variable grey level printing.

19. The method of claim 18, and wherein the signals for grey level printing represent activation times for the recording elements (20a, 20b, 20c), the activation times being adjusted to correct for nonuniformities of the recording elements.

20. The method of claim 18 and wherein the signals for grey level printing are created in response to other data signals representing levels of grey of dots to be printed, the levels of grey represented by said other data signals being uniformly stepped in psychometric lightness space.

21. A method of printing which uses an array (10) of radiation-emitting elements (20a, 20b, 20c), the method comprising the steps of:
(a) advancing an imaging surface (12) adapted to receive the radiation relative to the array (10) and selectively enabling the elements (20a, 20b, 20c) for predetermined periods of time during a cycle of operation to form an image on the surface (12);
(b) operating a digital counting means (30) having a plurality of output lines with signals thereon representing in digital form a time-changing numerical count;
(c) changing the count represented by the output lines in response to first clock pulses;
(d) comparing the time-changing count with each of several different predetermined counts and generating respective waveform pulses, each of which commences and/or terminates with a respective predetermined count, the time duration of each waveform pulse being different dependent upon the respective predetermined count selected; and
(e) the set of waveform pulses determining the enabling times of selected elements (20a, 20b, 20c); and
characterized by
in step (c) providing the first clock pulses at non-uniform intervals;
and wherein a data source (16) provides a multibit grey level signal for each picture element to be recorded, the grey level signal being represented by N digital bits of data wherein N is an integer greater than one; and
in response to said grey level signal there is generated, for correction for nonuniformities of said radiation emitting elements (20a, 20b, 20c), a corrected grey level signal of N plus M bits of data for each radiation emitting element (20a, 20b, 20c) that is to be enabled to record a respective picture element, wherein M is an integer greater than zero; and
the time duration of the enabling of a radiation-emitting element (20a, 20b, 20c) is controlled in response to the corrected grey level signal.

## Patentansprüche

1. Berührungsloser Drucker mit
- einem Array (10) strahlungsemittierender Elemente (20a, 20b, 20c);
- einem Mittel (31) zum wahlweisen Ansteuern der Elemente für eine vorbestimmte Zeitdauer während eines Arbeitszyklusses, um Strahlung zur Verwendung bei der Aufzeichnung zu erzeugen;
- wobei die Ansteuermittel (30, 33, 28a-c) ein Schaltungsmittel zum Erzeugen eines pulsbreitenmodulierten Satzes von Wellenformen zum Bestimmen der Ansteuerzeit ausgewählter Elemente aufweisen; wobei das Schaltungsmittel folgende Komponenten umfaßt:
- ein digitales Zählmittel (30) mit mehreren Ausgängen, die in digitaler Form einen zeitverändernden numerischen Zählwert während eines Zählmodus darstellen;
- ein mit dem digitalen Zählmittel (30) gekoppeltes Taktmittel (33) zum Verändern des durch die Ausgänge dargestellten Zählwerts; und
- mit den Ausgängen gekoppelte Komparatormittel (28a, 28b, 28c), welche den zeitverändernden Zählwert mit jeder von mehreren unterschiedlichen, vorbestimmten Zählwerten vergleichen und jeweils Wellenformimpulse erzeugen, deren Dauer jeweils zu einem vorbestimmten Zählwert in Bezug steht;
gekennzeichnet durch
- das Taktmittel (33), welches erste Taktimpulse in ungleichmäßigen Abständen zum Verändern des Zählwerts in ungleichmäßigen Abständen während des Zählmodus erzeugt; und eine Datenquelle (21), die für jedes aufzuzeichnende Pixel ein Multibit-Graustufensignal liefert, wobei ein Graustufensignal durch N digitale Datenbits dargestellt wird und N eine ganze Zahl > 1 ist;
- ein Korrekturmittel (16) zum Korrigieren von Unregelmäßigkeiten der strahlungsemittierenden Elemente (20a, 20b, 20c), wobei das Korrekturmittel (16) auf das Graustufensignal anspricht, um ein korrigiertes Graustufensignal von N plus M Datenbits für jedes strahlungsemittierende Element (20a, 20b, 20c) zu erzeugen, das für die jeweilige Aufzeichnung eines Pixels freigegeben werden soll, wobei M eine ganze Zahl > 0 ist; und
- die Ansteuermittel (30, 33, 28a-c), welche die Zeitdauer der Ansteuerung eines strahlungsemittierenden Elements (20a, 20b, 20c) in Abhängigkeit von dem korrigierten Graustufensignal steuert.

2. Drucker nach Anspruch 1, dadurch gekennzeichnet, daß das Zählmittel (30) ein Zähler mit Vor- und Rückwärtszählmodus ist; wobei die Komparatormittel (28a, 28b, 28c) die jeweiligen Wellenformimpulse mit jeweils vorbestimmten Zählwerten starten und beenden und der jeweils vorbestimmte Zählwert, bei dem jeder Wellenformimpuls startet und endet, der gleiche numerische Zählwert ist, aber in unterschiedlichen Betriebsarten des Zählers, um für den Satz Wellenformimpulse einen gemeinsamen Zentralzeitpunkt zu erstellen.

3. Drucker nach Anspruch 1 oder 2, dadurch gekennzeichnet, daß die Anordnung (10) strahlungsemittierender Elemente (20a, 20b, 20c) aus LED's besteht, und daß ein LED für eine Zeitdauer angesteuert wird, die durch die Dauer eines Wellenformimpulses vorgegeben wird.

4. Drucker nach Anspruch 1 oder 2, dadurch gekennzeichnet, daß die Datenquelle (21) jeweils unterschiedliche, vorbestimmte Zählwerte liefert, um für jedes der Elemente (20a, 20b, 20c) im Verlauf von mehreren Zyklen gemäß der durch jedes der Elemente (20a, 20b, 20c) zu druckenden Daten unterschiedliche Ansteuerzeiten zu erstellen.

5. Drucker nach Anspruch 4, dadurch gekennzeichnet, daß die Signale zum Drucken von Graustufen in Abhängigkeit von anderen Datensignalen erzeugt werden, die Graustufen von zu druckenden Punkten darstellen, wobei die durch die anderen Datensignale dargestellten Graustufen im psychometrischen Helligkeitsraum gleichmäßig abgestuft sind.

6. Drucker nach Anspruch 1 oder 2, dadurch gekennzeichnet, daß das Taktmittel (33) einige erste Taktimpulse erzeugt, die gleichmäßig beabstandet sind.

7. Drucker nach Anspruch 1 oder 2, dadurch gekennzeichnet, daß das Taktmittel (33) einen Haupttaktgeber (19) zum Erzeugen gleichmäßig beabstandeter Hochgeschwindigkeits-Taktimpulse, einen zweiten Zähler (17) zum Zählen einer vorbestimmten Anzahl von Hochgeschwindigkeits-Taktimpulsen und Erzeugen eines ersten Taktimpulses in Abhängigkeit vom Zählwert der vorbestimmten Anzahl von Hochgeschwindigkeits-Taktimpulsen, und Mittel aufweist, welche die vorbestimmte Anzahl ändert, um den Abstand zwischen den ersten Taktimpulsen zu verändern.

8. Drucker nach Anspruch 7, dadurch gekennzeichnet, daß der Haupttaktgeber (19) justierbar ist; und daß ein Mittel (31, 19) zum Einstellen der Dauer der vom Haupttaktgeber kommenden Taktimpulse in Abhängigkeit vom Bearbeitungszustand des auf einer Abbildungsfläche belichteten Bildes vorgesehen ist.

9. Drucker nach Anspruch 1, dadurch gekennzeichnet, daß das Taktmittel (33, 19) justierbar ist; und daß Mittel (31, 33) zum Einstellen der Dauer der vom Taktmittel kommenden Taktimpulse in Abhängigkeit vom Bearbeitungszustand des auf einer Abbildungsfläche (12) belichteten Bildes vorgesehen sind.

10. Drucker nach Anspruch 8 oder 9, dadurch gekennzeichnet, daß der Bearbeitungszustand Farbdrucken ist und die Mittel (31, 33) zum Einstellen der Dauer der vom Taktgeber (33) kommenden Taktimpulse in Abhängigkeit vom Drucken eines der Farbauszüge der Reihe von Farbauszügen für die Erzeugung eines mehrfarbigen Abzuges arbeiten.

11. Berührungsloser Drucker mit
- einer Vielzahl von Aufzeichnungselementen (20a, 20b, 20c) ;
- einem Mittel zum wahlweisen Ansteuern der Aufzeichnungselemente (20a, 20b, 20c) für eine vorbestimmte Zeitdauer während eines Arbeitszyklusses, um Strahlung zur Verwendung bei der Aufzeichnung zu erzeugen;
- wobei die Ansteuermittel ein Schaltungsmittel (26a, 28a, 32a, 23a) zum Erzeugen eines pulsbreitenmodulierten Satzes von Wellenformen zum Bestimmen der Ansteuerzeit ausgewählter Aufzeichnungselemente (20a, 20b, 20c) aufweisen;
- Mitteln (21, 16) zum Zuführen entsprechender Multibit-Datensignale zu dem Ansteuermittel zum Aufzeichnen entsprechender Bildelemente durch die entsprechenden Aufzeichnungselemente (20a, 20b, 20c);
- einem Taktmittel (33), das in ungleichmäßigen Abständen dem Ansteuermittel Taktimpulse zum Steuern der Ansteuerzeiten der Aufzeichnungselemente (20a, 20b, 20c) während der Aufzeichnung der Bildelemente liefert; und
- Mitteln (31, 17, 18, 19) zum Einstellen des Taktgebers in Abhängigkeit von einem Signal, welches eine Farbe für ein aufzuzeichnendes Bild darstellt, wobei sich die Ansteuerzeit für die Aufzeichnung, in Abhängigkeit von einem Multibit-Datensignal, eines Bildelements für ein Bild in einer Farbe von der Ansteuerzeit für die Aufzeichnung, in Abhängigkeit von einem identischen Multibit-Datensignal, eines Bildelements für ein Bild in einer anderen Farbe unterscheidet.

12. Drucker nach Anspruch 11, gekennzeichnet durch
- eine Abbildungsfläche (12) zum Empfangen der Strahlung;
- Mittel (31, 33, 26a, 28a, 23a, 30) zum wahlweisen Ansteuern der Aufzeichnungselemente (20a, 20b, 20c) für eine vorbestimmte Zeitdauer während eines Arbeitszyklusses, um auf der Abbildungsfläche (12) eine Reihe von Farbauszügen zu erzeugen; und
dadurch gekennzeichnet, daß das Schaltungsmittel folgende Komponenten umfaßt:
- ein digitales Zählmittel (30) mit mehreren Ausgängen, die in digitaler Form einen zeitverändernden numerischen Zählwert während eines Zählmodus darstellen;
- ein mit dem digitalen Zählmittel (30) gekoppeltes Taktmittel (33) zum Verändern des durch die Ausgänge dargestellten Zählwerts; und
- mit den Ausgängen gekoppelte Komparatormittel (28a, 28b, 28c), welche den zeitverändernden Zählwert mit jeder von mehreren unterschiedlichen, vorbestimmten Zählwerten vergleichen und jeweils Wellenformimpulse erzeugen, deren Dauer jeweils zu einem vorbestimmten Zählwert in Bezug steht;
gekennzeichnet durch
- das Taktmittel (33), welches die Taktimpulse zum Ändern des Zählwerts während des Zählmodus erzeugt, wobei sich die Änderungsrate des Zählwerts während der Ansteuerung der strahlungsemittierenden Elemente (20a, 20b, 20c) zum Erzeugen eines Bildes in einer der Farben aus einer Reihe von Farbauszügen von der bei der Freigabe der Elemente zum Erzeugen eines Bildes in einer anderen Farbe für dieselbe Reihe von Farbauszügen verwendeten Rate unterscheidet.

13. Drucker nach Anspruch 12, dadurch gekennzeichnet, daß daß das Taktmittel (33) einen Haupttaktgeber (19) zum Erzeugen gleichmäßig beabstandeter Hochgeschwindigkeits-Taktimpulse, einen zweiten Zähler (17) zum Zählen einer vorbestimmten Anzahl von Hochgeschwindigkeits-Taktimpulsen und Erzeugen eines ersten Taktimpulses in Abhängigkeit vom Zählwert der vorbestimmten Anzahl von Hochge-schwindigkeits-Taktimpulsen, und Mittel (31, 18) aufweist, welche die vorbestimmte Anzahl ändern, um den Abstand zwischen den ersten Taktimpulsen zu verändern.

14. Verfahren zum berührungslosen Drucken mit folgenden Schritten:
- Erzeugen eines Multibit-Datensignals für jedes aus einer Vielzahl von Aufzeichnungselementen (20a, 20b, 20c) zum Aufzeichnen der jeweiligen Bildelemente auf einem Aufzeichnungsmedium (12);
- Erzeugen von Taktimpulsen mit ungleichmäßigen Abständen zum Steuern der Ansteuerzeiten der Aufzeichnungselemente (20a, 20b, 20c) während der Aufzeichnung der jeweiligen Bildelemente; und
- Einstellen der Ansteuerzeiten zum Aufzeichnen der jeweiligen Bildelemente in Abhängigkeit von einem Signal, welches eine Farbe für ein aufzuzeichnendes Bild darstellt, wobei sich die Ansteuerzeit zum Aufzeichnen, in Abhängigkeit von einem Multibit-Datensignal, eines Bildelements für ein Bild in einer Farbe von der Ansteuerzeit zum Aufzeichnen, in Abhängigkeit von einem identischen Multibit-Datensignal, eines Bildelements für ein Bild in einer anderen Farbe unterscheidet.

15. Verfahren nach Anspruch 14 mit folgenden Schritten:
- Fortschalten des Aufzeichnungsmediums (12) relativ zur Anordnung (10), wahlweises Freigeben der Elemente (20a, 20b, 20c) für eine vorbestimmte Zeitdauer während eines Arbeitszyklusses, um auf dem Medium ein Bild zu erzeugen;
- Aktivieren eines Digitalzählers (30), der mehrere Ausgänge mit Signalen aufweist, die in digitaler Form einen zeitverändernden numerischen Zählwert darstellen;
- Ändern des durch die Ausgänge dargestellten Zählwerts in Abhängigkeit von den Taktimpulsen;
- Vergleichen des zeitverändernden Zählwerts mit jedem von mehreren unterschiedlichen, vorbestimmten Zählwerten und Erzeugen der jeweiligen Wellenformimpulse, von denen jeder mit einem entsprechenden, vorbestimmten Zählwert startet und/oder endet, wobei die Zeitdauer jedes Wellenformimpulses in Abhängigkeit vom jeweiligen vorbestimmten, ausgewählten Zählwert unterschiedlich ist; und
- Bestimmen der Ansteuerzeiten der ausgewählten Elemente (20a, 20b, 20c) durch den Satz der Wellenformimpulse.

16. Verfahren nach Anspruch 15, dadurch gekennzeichnet, daß der Satz Wellenformimpulse einen gemeinsamen Zeitpunkt aufweist, um den er zentriert ist.

17. Verfahren nach Anspruch 15 oder 16, dadurch gekennzeichnet, daß der zeitverändernde Zählwert mit einem vorbestimmten, zu druckende Daten darstellenden Zählwert und der Änderung der vorbestimmten Zählwerte für jedes der Elemente (20a, 20b, 20c) gemäß den zu druckenden Daten verglichen wird.

18. Verfahren nach Anspruch 17, dadurch gekennzeichnet, daß die Datensignale zumindest teilweise Datensignale zum Drucken variabler Graustufen darstellen.

19. Verfahren nach Anspruch 18, dadurch gekennzeichnet, daß die Signale zum Drucken von Graustufen Aktivierungszeiten für die Aufzeichnungselemente (20a, 20b, 20c) darstellen, wobei die Aktivierungszeiten eingestellt werden, um die Unregelmäßigkeiten der Aufzeichnungselemente zu korrigieren.

20. Verfahren nach Anspruch 18, dadurch gekennzeichnet, daß die Signale zum Drucken von Graustufen in Abhängigkeit von anderen Datensignalen erzeugt werden, die Graustufen von zu druckenden Punkten darstellen, wobei die durch die anderen Datensignale dargestellten Graustufen im psychometrischen Helligkeitsraum gleichmäßig abgestuft sind.

21. Druckverfahren unter Verwendung einer Anordnung (10) von strahlungsemittierenden Elementen (20a, 20b, 20c) mit folgenden Schritten:
(a) Fortschalten einer für den Empfang der Strahlung ausgebildete Abbildungsfläche (12) relativ zur Anordnung (10) und wahlweises Ansteuern der Elemente (20a, 20b, 20c) für eine vorbestimmte Zeitdauer während eines Arbeitszyklusses, um auf der Abbildungsfläche (12) ein Bild zu erzeugen;
(b) Aktivieren eines Digitalzählers (30), der mehrere Ausgänge mit Signalen aufweist, die in digitaler Form einen zeitverändernden numerischen Zählwert darstellen;
(c) Ändern des durch die Ausgänge dargestellten Zählwerts in Abhängigkeit von ersten Taktimpulsen;
(d) Vergleichen des zeitverändernden Zählwerts mit jedem von mehreren unterschiedlichen, vorbestimmten Zählwerten und Erzeugen der jeweiligen Wellenformimpulse, von denen jeder mit einem entsprechenden, vorbestimmten Zählwert startet und/oder endet, wobei die Zeitdauer jedes Wellenformimpulses in Abhängigkeit vom jeweiligen vorbestimmten, ausgewählten Zählwert unterschiedlich ist; und
(e) Bestimmen der Ansteuerzeiten der ausgewählten Elemente (20a, 20b, 20c) durch den Satz der Wellenformimpulse;
dadurch gekennzeichnet, daß
- in Schritt (c) die ersten Taktimpulse mit ungleichmäßigen Abständen erzeugt werden;
- die Datenquelle (16) ein Multibit-Graustufensignal für jedes aufzuzeichnende Bildelement liefert, wobei das Graustufensignal durch N digitale Datenbits dargestellt wird und N eine ganze Zahl > 1 ist;
- in Abhängigkeit von dem Graustufensignal für die Korrektur der Unregelmäßigkeiten der strahlungsemittierenden Elemente (20a, 20b, 20c) ein korrigiertes Graustufensignal aus N plus M Bits für jedes strahlungsemittierende Element (20a, 20b, 20c), das für die Aufzeichnung eines entsprechenden Bildelements freizugeben ist, erzeugt wird, wobei M eine ganze Zahl > 0 ist; und
- die Zeitdauer der Ansteuerung eines strahlungsemittierenden Elements (20a, 20b, 20c) in Abhängigkeit von dem korrigierten Graustufensignal gesteuert wird.

## Revendications

1. Appareil d'impression sans impact qui comprend :
une rangée (10) d'éléments d'émission de rayonnement (20a, 20b, 20c) ;
un moyen (31) pour activer sélectivement les éléments pendant des durées prédéterminées pendant un cycle de fonctionnement pour former un rayonnement utilisable pour l'enregistrement ;
le moyen d'activation (30, 33, 28a à c) incluant des moyens de circuit pour générer un ensemble de formes d'onde à largeur d'impulsion modulée pour déterminer le temps d'activation des éléments sélectionnés ; et dans lequel le moyen de circuit comprend :
un moyen de comptage numérique (30) comportant une pluralité de lignes de sortie représentant sous forme numérique un compte numérique changeant dans le temps pendant un mode comptage ;
un moyen d'horloge (33) couplé au moyen de comptage numérique (30) pour changer le compte représenté par les lignes de sortie ; et
un moyen de comparateur (28a, 28b, 28c) couplé aux lignes de sortie et comparant le compte changeant avec le temps avec chacun des divers comptes prédéterminés différents et pour générer des impulsions de forme d'onde respectives dont leurs durées sont liées au compte prédéterminé respectif ; et caractérisé par
le moyen d'horloge (33) délivrant des premières impulsions d'horloge à des intervalles non uniformes pour changer le compte à des intervalles non uniformes pendant le mode comptage ; et un moyen de source de données (21) délivrant un signal de niveau de gris à bits multiples pour chaque élément d'image qui doit être enregistré, un signal de niveau de gris étant représenté par N bits numériques de données dans lequel N est un nombre entier supérieur à un ; et
un moyen de correction (16) pour corriger les non uniformités desdits éléments à émission de rayonnement (20a, 20b, 20c), ledit moyen de correction (16) étant sensible audit signal de niveau de gris pour générer un signal de niveau de gris corrigé de N plus M bits de données pour chaque élément à émission de rayonnement (20a, 20b, 20c) qui doit être activé pour enregistrer un élément d'image respectif, dans lequel M est un nombre entier supérieur à zéro ; et
le moyen d'activation (30, 33, 28a à c) commande la durée d'activation d'un élément à émission de rayonnement (20a, 20b, 20c) en réponse au signal de niveau de gris corrigé.

2. Appareil selon la revendication 1 dans lequel le moyen de comptage (30) est un compteur ayant des modes de comptage et de décomptage, le moyen de comparateur (28a, 28b, 28c) commençant et terminant les impulsions de forme d'onde respectives à des comptes prédéterminés respectifs et le compte prédéterminé respectif dans lequel chaque impulsion de forme d'onde commence et se termine est le même compte numérique mais dans des modes différents du compteur de façon à établir un point temporel central commun pour l'ensemble des impulsions de forme d'onde.

3. Appareil selon la revendication 1 ou 2 et dans lequel la rangée (10) d'éléments à émission de rayonnement (20a, 20b, 20c) comprend des diodes à émission de lumière et dans lequel une diode à émission de lumière est activée pendant une durée prédéterminée par la durée de l'impulsion de forme d'onde.

4. Appareil selon la revendication 1 ou 2 dans lequel le moyen de source de données (21) délivre des comptes prédéterminés respectifs différents pour établir pour chacun desdits éléments (20a, 20b, 20c) des temps d'activation différents au cours des divers cycles en conformité avec les données qui doivent être imprimées par chacun desdits éléments (20a, 20b, 20c).

5. Appareil selon la revendication 4 et dans lequel les signaux pour l'impression des niveaux de gris sont créés en réponse à d'autres signaux de données représentant les niveaux de gris des points qui doivent être imprimés, les niveaux de gris représentés par lesdits autres signaux de données étant uniformément échelonnés dans un espace de luminosité psychométrique.

6. Appareil selon la revendication 1 ou 2 et caractérisé de plus en ce que le moyen d'horloge (33) produit certaines premières impulsions d'horloge qui sont à des intervalles uniformes.

7. Appareil selon la revendication 1 ou 2 et dans lequel le moyen d'horloge (33) comprend une horloge maître (19) pour générer des impulsions d'horloge à vitesse élevée à des intervalles uniformes, un second moyen de compteur (17) pour compter un nombre prédéterminé d'impulsions d'horloge à vitesse élevée et générer une première impulsion d'horloge en réponse au compte du nombre prédéterminé d'impulsions d'horloge à vitesse élevée et un moyen pour changer le nombre prédéterminé afin de changer l'intervalle entre les premières impulsions d'horloge.

8. Appareil selon la revendication 7 et dans lequel l'horloge maître (19) est une horloge ajustable ; et comprend un moyen (31, 19) pour ajuster la durée des impulsions d'horloge provenant de l'horloge maître en réponse à une condition de traitement de l'image qui est exposée sur une surface de formation d'image.

9. Appareil selon la revendication 1 et dans lequel le moyen d'horloge (33, 19) est une horloge ajustable ; et comprend un moyen (31, 33) pour ajuster la période des impulsions d'horloge provenant du moyen d'horloge en réponse à une condition de traitement de l'image qui est exposée sur une surface de formation d'image (12).

10. Appareil selon la revendication 8 ou 9 et dans lequel la condition de traitement est une impression couleur et le moyen (31, 33) pour ajuster la période des impulsions d'horloge provenant de l'horloge (33) agit en réponse à l'impression d'une des images à séparation de couleur dans une série d'images à séparation de couleur qui doit être utilisée pour former une reproduction à couleurs multiples.

11. Appareil d'impression sans impact comprenant :
une pluralité d'éléments d'enregistrement (20a, 20b, 20c) ;
un moyen pour activer sélectivement les éléments d'enregistrement (20a, 20b, 20c) pendant des périodes de temps prédéterminées pendant un cycle de fonctionnement afin de former un rayonnement utilisable pour l'enregistrement ;
le moyen d'activation comprenant un moyen de circuit (26a, 28a, 32a, 23a) pour générer un ensemble de formes d'onde à largeur d'impulsion modulée pour déterminer les temps d'activation des éléments d'enregistrement sélectionnés (20a, 20b, 20c) ;
un moyen (21, 16) pour délivrer des signaux de données à bits multiples respectifs au moyen d'activation pour enregistrer des éléments d'image respectifs par les éléments d'enregistrement respectifs (20a, 20b, 20c) ;
un moyen d'horloge (33) pour délivrer des impulsions d'horloge à des intervalles non uniformes audit moyen d'activation pour commander les temps d'activation desdits éléments d'enregistrement (20a, 20b, 20c) pendant l'enregistrement desdits éléments d'image ; et
un moyen (31, 17, 18, 19) pour ajuster le moyen d'horloge en réponse à un signal représentant une couleur pour une image qui doit être enregistrée, d'où il résulte que le temps d'activation pour l'enregistrement, en réponse à un signal de données à bits multiples, d'un élément d'image pour une image qui doit être dans une couleur, est différent du temps d'activation pour l'enregistrement, en réponse à un signal de données à bits multiples identique, d'un élément d'image pour une image qui doit être d'une couleur différente.

12. Appareil selon la revendication 11 et dans lequel :
une surface de formation d'image (12) est prévue pour recevoir le rayonnement ;
des moyens (31, 33, 26a, 28a, 23a, 30) sont prévus pour activer sélectivement les éléments d'enregistrement (20a, 20b, 20c) pendant des périodes de temps prédéterminées pendant un cycle de fonctionnement afin de former une série d'images à couleur séparée sur la surface (12) ; et
dans lequel le moyen de circuit comprend de plus :
un moyen de comptage numérique (30) comportant une pluralité de lignes de sortie représentant sous forme numérique un compte numérique changeant dans le temps pendant un mode comptage ;
le moyen d'horloge (33) est couplé au moyen de comptage numérique (30) pour changer le compte représenté par les lignes de sortie ; et
des moyens de comparateur (28a, 28b, 28c) sont couplés aux lignes de sortie et comparent le compte changeant avec le temps à chacun des divers comptes prédéterminés différents et génèrent des impulsions de forme d'onde respectives, dont la durée de chacune est liée à un compte prédéterminé respectif ; et caractérisé en ce que
le moyen d'horloge (33) délivre les impulsions d'horloge pour changer le temps pendant le mode comptage et en ce que la vitesse de changement de comptage est différente pendant l'activation des éléments à émission de rayonnement (20a, 20b, 20c) pour former une image qui doit être dans une des couleurs d'une série d'images à couleurs séparées à partir de la vitesse utilisée dans l'activation des éléments pour former une image qui doit être dans une autre couleur pour la même série d'image à couleurs séparées.

13. Appareil selon la revendication 12 et dans lequel le moyen d'horloge (33) comprend une horloge maître (19) pour générer des impulsions d'horloge à vitesse élevée à des intervalles uniformes, un second moyen de compteur (17) pour compter un nombre prédéterminé d'impulsions d'horloge à vitesse élevée et générer une première impulsion d'horloge en réponse au compte du nombre prédéterminé d'impulsions d'horloge à vitesse élevée et un moyen (31, 18) pour changer le nombre prédéterminé afin de changer l'intervalle entre les premières impulsions d'horloge.

14. Procédé d'impression sans impact comprenant les étapes consistant à :
générer un signal de données à bits multiples vers chacun de la pluralité des éléments d'enregistrement (20a, 20b, 20c) pour enregistrer des éléments d'image respectifs sur un support d'enregistrement (12) ;
générer des impulsions d'horloge à des intervalles non uniformes pour commander les temps d'activation desdits éléments d'enregistrement (20a, 20b, 20c) pendant l'enregistrement desdits éléments d'image respectifs ; et
ajuster les temps d'activation pour l'enregistrement des éléments d'image respectifs en réponse à un signal représentant une couleur pour une image qui doit être enregistrée, le temps d'activation pour l'enregistrement, en réponse à un signal de données à bits multiples, d'un élément d'image pour une image qui doit être dans une couleur étant différent du temps d'activation pour l'enregistrement, en réponse à un signal de données à bits multiples identique, d'un élément d'image pour une image qui doit être d'une couleur différente.

15. Procédé selon la revendication 14 comprenant les étapes consistant à :
avancer le support d'enregistrement (12) par rapport à la rangée (10), activer sélectivement les éléments (20a, 20b, 20c) pendant des périodes de temps prédéterminées pendant un cycle de fonctionnement afin de former l'image sur le support ;
déclencher un moyen de comptage numérique (30) comportant une pluralité de lignes de sortie avec des signaux sur celles-ci représentant sous forme numérique un compte numérique changeant dans le temps ;
changer le compte représenté par les lignes de sortie en réponse à une impulsion d'horloge ;
comparer le compte changeant dans le temps à chacun des divers comptes prédéterminés différents et générer des impulsions de forme d'onde respectives, dont chacune commence et/ou se termine avec un compte prédéterminé respectif, la durée de chaque impulsion de forme d'onde étant différente en fonction du compte prédéterminé respectif sélectionné ; et
l'ensemble des impulsions de forme d'onde déterminant les temps d'activation des éléments sélectionnés (20a, 20b, 20c).

16. Procédé selon la revendication 15, dans lequel l'ensemble des formes d'onde présente un point temporel central commun.

17. Procédé selon la revendication 15 ou 16, dans lequel le compte changeant dans le temps est comparé à un compte prédéterminé représentant les données qui doivent être imprimées et les comptes prédéterminés changent pour chacun desdits éléments (20a, 20b, 20c) en conformité avec les données qui doivent être imprimées.

18. Procédé selon la revendication 17 et dans lequel les signaux de données représentent au moins en partie des signaux de données pour l'impression de niveaux de gris variable.

19. Procédé selon la revendication 18 et dans lequel les signaux pour l'impression de niveaux de gris représentent les temps d'activation pour les éléments d'enregistrement (20a, 20b, 20c), les temps d'activation étant ajustés pour corriger les non uniformités des éléments d'enregistrement.

20. Procédé selon la revendication 18 et dans lequel les signaux pour l'impression de niveaux de gris sont créés en réponse à d'autres signaux de données représentant les niveaux de gris des points qui doivent être imprimés, les niveaux de gris représentés par lesdits autres signaux de données étant uniformément étagés dans un espace de luminosité psychométrique.

21. Procédé d'impression qui utilise une rangée (10) d'éléments émettant un rayonnement (20a, 20b, 20c), le procédé comprenant les étapes consistant à :
(a) avancer une surface de formation d'image (12) prévue pour recevoir le rayonnement par rapport à la rangée (10) et activer sélectivement les éléments (20a, 20b, 20c) pendant des durées prédéterminées pendant un cycle de fonctionnement afin de former une image sur la surface (12) ;
(b) déclencher un moyen de comptage numérique (30) comportant une pluralité de lignes de sortie avec des signaux sur celles-ci représentant sous forme numérique un compte numérique changeant dans le temps ;
(c) changer le compte représenté par les lignes de sortie en réponse à des premières impulsions d'horloge ;
(d) comparer le compte changeant dans le temps à chaque compte de divers comptes prédéterminés différents et générer des impulsions de forme d'onde respectives, dont chacune commence et/ou se termine à un compte prédéterminé respectif, la durée de chaque impulsion de forme d'onde étant différente en fonction du compte prédéterminé respectif sélectionné ; et
(e) l'ensemble des impulsions de forme d'onde déterminant les temps d'activation des éléments sélectionnés (20a, 20b, 20c) ; et caractérisé par
dans l'étape (c), délivrer les premières impulsions d'horloge à des intervalles non uniformes ;
et dans lequel une source de données (16) délivre un signal de niveaux de gris à bits multiples pour chaque élément d'image qui doit être enregistré, le signal de niveaux de gris étant représenté par N bits numériques de données dans lequel N est un nombre entier supérieur à un ; et
en réponse audit signal de niveaux de gris, produire, pour correction des non uniformités desdits éléments d'émission de rayonnement (20a, 20b, 20c), un signal de niveaux de gris corrigé de N plus M bits pour chaque élément d'émission de rayonnement (20a, 20b, 20c) qui doit être activé afin d'enregistrer un élément d'image respectif, dans lequel M est un nombre entier supérieur à zéro ; et
la durée d'activation d'un élément d'émission de rayonnement (20a, 20b, 20c) est commandée en réponse au signal de niveaux de gris corrigé.
